(19) Europäisches Patentamt
European Patent Office
Office européen des brevets

(11) EP 2 228 399 B1

(12) EUROPEAN PATENT SPECIFICATION

(45) Date of publication and mention
of the grant of the patent:
**11.02.2015 Bulletin 2015/07**

(51) Int Cl.:
***C08G 63/78*** (2006.01)

(21) Application number: **08866143.4**

(86) International application number:
**PCT/JP2008/073017**

(22) Date of filing: **17.12.2008**

(87) International publication number:
**WO 2009/084443 (09.07.2009 Gazette 2009/28)**

(54) **METHOD FOR PRODUCING ALIPHATIC POLYESTER**

VERFAHREN ZUR HERSTELLUNG EINES ALIPHATISCHEN POLYESTERS

MÉTHODE DE PRODUCTION D'UN POLYESTER ALIPHATIQUE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **27.12.2007 JP 2007337887**

(43) Date of publication of application:
**15.09.2010 Bulletin 2010/37**

(73) Proprietor: **Mitsubishi Chemical Corporation
Chiyoda-ku
Tokyo 100-8251 (JP)**

(72) Inventors:
• **HAMANO, Toshiyuki**
  **Yokkaichi-shi**
  **Mie 510-8530 (JP)**
• **MATSUI, Hiromichi**
  **Yokkaichi-shi**
  **Mie 510-8530 (JP)**
• **MATSUZONO, Shinichiro**
  **Yokkaichi-shi**
  **Mie 510-8530 (JP)**

(74) Representative: **Vossius & Partner
Siebertstrasse 4
81675 München (DE)**

(56) References cited:
**EP-A1- 1 153 954       JP-A- 58 083 025
JP-A- 2002 105 185     JP-A- 2002 194 072
JP-A- 2005 248 174     JP-A- 2006 028 282
JP-A- 2006 188 576     JP-A- 2007 009 150
JP-U- 4 110 734**

• **DATABASE WPI Week 200571 Thomson
Scientific, London, GB; AN 2005-685085
XP002698961, & JP 2005 248174 A (MITSUBISHI
CHEM CORP) 15 September 2005 (2005-09-15)**

**Description**

TECHNICAL FIELD

The present invention relates to a method for producing aliphatic polyester. More particularly, the invention relates to a method for producing aliphatic polyester, that can reduce foreign matters contained in the aliphatic polyester obtained.

BACKGROUND ART

In recent years, awareness to environmental problems such as depletion of fossil fuel, and carbon dioxide increase in the atmosphere is heightened. Even in plastic industry, countermeasure to environmental problems considering life cycle of from production of products to disposal thereof is urgent need.

Based on such a background, aliphatic polyester is noted as eco-friendly plastics. Aliphatic polyester can be obtained from aliphatic dicarboxylic acid and aliphatic diol by conducting esterification reaction and melt polycondensation reaction. Aliphatic dicarboxylic acid as a raw material (for example, succinic acid and adipic acid) can be produced from plant-derived glucose using fermentation method, and aliphatic diol (for example, ethylene glycol, propanediol and butanediol) can also be produced from plant-derived raw materials. Therefore, resource saving of fossil fuel can be promoted. At the same time, carbon dioxide in the atmosphere is absorbed by growth of plants, and this can greatly contribute to carbon dioxide emissions reduction. Furthermore, it is known that aliphatic polyester shows excellent biodegradability, and it can be therefore said that the aliphatic polyester is triply eco-friendly plastic.

In the case that aliphatic polyester is actually used, the aliphatic polyester is formed into a film and a fiber, and used in such a form. Therefore, at the time of the production of aliphatic polyester, it is required to minimize foreign matters that pose obstacles on forming those products or pose defects on properties of molded articles.

However, most aliphatic polyesters have a low melting point as generally 120°C or lower (see Non-Patent Document 1), and have poor thermal stability. In particular, the temperature of melt polycondensation reaction is generally higher than a melting point by at least 100°C. Therefore, thermal decomposition is liable to develop during reaction, and decomposition products are liable to mix as foreign matters. Furthermore, depending on the combination of aliphatic dicarboxylic acid and aliphatic diol as raw materials (such as succinic acid and 1,4-butanediol), considerable amount (about 1% by mass) of cyclic dimer by-produces during reaction, and this substance is liable to be the cause of clogging during reaction process.

Regarding aromatic polyester, Patent Document 1 relating to polybutylene terephthalate proposes controlling temperature of a gas phase part of a melt polycondensation reaction tank at a constant temperature of 260°C or lower as a method for decreasing foreign matters at the time of the production.

EP 1 153 954 A1 discloses in examples 1-3 methods to prepare aliphatic polyester from succinic acid and 1,4-butanediol comprising esterification and solid phase polymerization.

JP 2005 248174 A (see WPI abstract) discloses the preparation of aromatic polyesters comprising a step of distilling of the diol for recycling in the step of esterification.

However, this method utilizes properties of aromatic polyester that a melting point is high as compared with aliphatic polyester (melting point of polybutylene terephthalate is about 220°C), thermal stability is good, difference between melt polycondensation reaction temperature and melting point is small (for example, melt polycondensation reaction temperature is 240 to 260°C), and thermal decomposition during reaction is few, and this method cannot directly be used to aliphatic polyester. Therefore, a method of reducing foreign matters, that can be applied to the production of aliphatic polyester is required.

Patent Document 1: JP-A-2002-194072
Non-Patent Document 1: Saturated Polyester Resin Handbooks, p. 575, Nikkan Kogyo Shimbun, Ltd.

DISCLOSURE OF THE INVENTION

PROBLEMS THAT THE INVENTION IS TO SOLVE

In view of the above problems, the present invention has an object to provide a method for producing aliphatic polyester having reduced foreign matters stably and efficiently.

Means for Solving the Problems

As a result of investigations regarding the above problems, the present inventors have found that when wall surface temperature T of a distillation pipe which distills by-produced aliphatic diol is controlled to a specific range, generation of foreign matters during reaction can be suppressed, thereby aliphatic polyester can be produced stably and efficiently, and have reached the invention.

That is, the invention provides a method for producing aliphatic polyester comprising aliphatic dicarboxylic acid and aliphatic diol as the main components, which uses continuous plural reaction tanks and obtains polyester through esterification reaction and melt polycondensation reaction, **characterized in that** the melt polycondensation reaction is conducted while distilling by-produced aliphatic diol generated by reaction such that the relationship among a boiling point t1 (°C) of by-produced aliphatic diol under the pressure in a polycondensation reaction tank for conducting melt polycondensation reaction, a wall surface temperature T (°C) of a distillation pipe which distills by-produced aliphatic diol from the polycondensation reaction tank, and an inner temperature t2 (°C) of the polycondensation reaction tank satisfies the following formula (1),
and solves the above problems.

$$\text{t1} < \text{T} < \text{t2} \qquad\qquad\qquad (1)$$

In the invention, it is preferred that the relationship between T (°C) and t2 (°C) further satisfies the following formula (2).

$$150\,(^{\circ}\text{C}) \leqq \text{T} < \text{t2} \qquad\qquad\qquad (2)$$

In this embodiment, it is preferred that 50 mol% or more of the aliphatic dicarboxylic acid is succinic acid, and the aliphatic diol is 1,4-butanediol.

In the invention, it is preferred that trifunctional or more multifunctional compound is contained as a copolymer component in the aliphatic polyester.

In the invention, it is preferred that the polycondensation reaction tank is a horizontal polycondensation reaction tank equipped with a pressure-reducing apparatus for maintaining the pressure in the polycondensation reaction tank in a reaction pressure of the atmospheric pressure or lower, and a condenser for condensing by-produced aliphatic diol which is distilled outside the polycondensation reaction tank from the distillation pipe, and it is preferred that the horizontal polycondensation tank is further equipped with a condenser for condensing by-produced cyclic dimer which is distilled outside the polycondensation reaction tank from the distillation pipe.

Furthermore, in the above preferred embodiment that the horizontal polycondensation tank is equipped with a condenser for condensing by-produced cyclic dimer, it is preferred that the by-produced cyclic dimer is extracted from the condenser for condensing the by-produced cyclic dimer, and the extracted cyclic dimer is subjected to esterification reaction.

In the invention, it is preferred that a filter is provided on at least one place of flow passage of a reactant in the melt polycondensation reaction.

ADVANTAGE OF THE INVENTION

According to the present invention, foreign matters in an aliphatic polyester resin can be reduced. As a result, in the production process, clogging is difficult to be generated, and an aliphatic polyester resin can be produced stably and efficiently. Additionally, due to this, an aliphatic polyester molded article having good quality can be obtained.

BRIEF DESCRIPTION OF THE DRAWINGS

[Fig. 1] Fig. 1 is a schematic view showing one embodiment of esterification reaction process in the production method of aliphatic polyester according to the present invention.
[Fig. 2] Fig. 2 is a schematic view showing one embodiment of polycondensation process in the production method of aliphatic polyester according to the present invention.
[Fig. 3] Fig. 3 is a schematic view showing one embodiment of polycondensation distillation process in the production method of aliphatic polyester according to the present invention.

DESCRIPTION OF REFERENCE NUMERALS AND SIGNS

1: Raw material supply line
2: Recirculation line
3: Catalyst supply line
4: Extraction line of esterification reactant
5: Distillation line
6: Extraction line
7: Circulation line
8: Extraction line
9: Gas extraction line
10: Condensate line
11: Extraction line
12: Circulation line
13: Extraction line
14: Vent line
A: Esterification reaction tank
B: Extraction pump
C: Rectification column
D, E: Pump
F: Tank
G: Condenser
L1, L3, L5: Reactant extraction line
L2, L4, L6: Distillation pipe
L7, L8, L9: Vent line
L10: Recycle line of collected liquid to esterification reaction tank
L11: Catalyst supply line
a: First polycondensation reaction tank
d: Second polycondensation reaction tank
k: Third polycondensation reaction tank
c, e, m: Extraction gear pump
n: Filter
g: Die head
h: Rotary cutter
P1, Q3, R3: Wet condenser
P2, Q4, R4: Liquid tank
P3, Q5, R5: Pump
P4, Q6, R6: Heat exchanger
Q1, R1: Dry condenser
Q2, R2: Liquid tank
21, 24, 27: Liquid supply line
22, 25, 28: Circulation line
23, 26, 29: Extraction line

BEST MODE FOR CARRYING OUT THE INVENTION

The aliphatic polyester produced by the production method of the present invention is polyester comprising aliphatic dicarboxylic acid and aliphatic diol as the main components, and is produced by esterification reaction and the subsequent melt polycondensation reaction. The term "aliphatic dicarboxylic acid and aliphatic diol as the main components" used herein means that 50 mol% or more, preferably 70 mol% or more and most preferably 85 mol% or more of all dicarboxylic acid components constituting polyester of the invention is aliphatic dicarboxylic acid, and 85 mol% or more of all diol components constituting polyester of the invention is aliphatic diol. Raw materials of aliphatic polyester and the production method of the invention are described in detail below.

(1) Raw material of aliphatic polyester

Aliphatic dicarboxylic acid component as a raw material of aliphatic polyester specifically includes oxalic acid, malonic acid, succinic acid, glutaric acid, adipic acid, pimelic acid, suberic acid, azelaic acid, sebacic acid, undecadicarboxylic acid, dodecadicarboxylic acid, dimer acid, hexahydrophthalic acid, hexahydro-isophthalic acid and hexahydroterephthalic acid. Furthermore, anhydrides of those, such as succinic anhydride, can be used. Those aliphatic dicarboxylic acids may be used alone or as mixtures of two kinds or more thereof. Of those, succinic acid, adipic acid and sebacic acid are preferred from the standpoint of properties of polyester obtained, and succinic acid is particularly preferred. Succinic acid is used preferably in an amount of 50 mol% or more, more preferably 70 mol% or more, and particularly preferably 90 mol% or more, to all aliphatic dicarboxylic acids from the standpoints of melting point (heat resistance), biodegradability and dynamic properties of aliphatic polyester obtained.

Other than the above aliphatic dicarboxylic acid, aromatic dicarboxylic acid may be used together as the dicarboxylic acid component. Specific examples of the aromatic dicarboxylic acid include terephthalic acid, isophthalic acid, naphthalenedicarboxylic acid and diphenyldicarboxylic acid. The aromatic dicarboxylic acid may be used alone or as mixtures of two kinds or more thereof.

The aliphatic diol component as other raw material of aliphatic polyester specifically includes ethylene glycol, 1,2-propanediol, 1,3-propanediol, 1,4-butanediol, 1,5-pentanediol, 1,6-hexanediol, 1,7-heptanediol, 1,8-octane-diol, 1,9-nonanediol, 1,10-decanediol, neopentyl glycol, diethylene glycol, polyethylene glycol, polypropylene glycol, polytetramethylene ether glycol, 1,2-cyclohexanediol, 1,4-cyclohexanediol, 1,2-cyclohexanedimethanol, 1,4-cyclohexanedimethanol, isosorbide, isomannide and isoidide. Those may be used alone or as mixtures of two kinds or more thereof. Of those, from properties of polyester obtained, ethylene glycol, 1,3-propanediol, 1,4-butanediol and 1,4-cyclohexanedimethanol are preferred, and 1,4-butanediol is particularly preferred. 1,4-Butanediol is used preferably in an amount of 50 mol% or more, more preferably 70 mol% or more, and particularly preferably 90 mol% or more, to all aliphatic diols from the standpoints of melting point (heat resistance), biodegradability and dynamic properties of aliphatic polyester obtained.

In the invention, the aliphatic polyester may contain other constituent component other than the above dicarboxylic acid component and aliphatic diol component. Copolymer component as the other constituent component includes oxycarboxylic acids such as lactic acid, glycolic acid, hydroxybutyric acid, hydroxycaproic acid, 2-hydroxy-3,3-dimethylbutyric acid, 2-hydroxy-3-methylbutyric acid, 2-hydroxyisocaproic acid, malic acid, citric acid, esters of those oxycarboxylic acids, lactone, and oxycarboxylic acid polymers; unsaturated carboxylic acids such as maleic acid and fumaric acid; trifunctional or more polyhydric alcohols such as glycerin, trimethylolpropane and pentaerythritol; trifunctional or more polycarboxylic acids or its anhydrides, such as propanetricarboxylic acid, pyromellitc acid, trimelitic acid, benzophenonetetracarboxylic acid and their anhydrides; and diisocyanate compounds such as hexamethylene diisocyanate and trimethylhexamethylene diisocyanate.

In particular, when a multifunctional compound such as trifunctional or more oxycarboxylic acid, trifunctional or more polyhydric alcohol, trifunctional or more polycarboxylic acid and diisocyanate compound is added as a copolymer component in small amount, high viscosity polyester is obtained. Therefore, such a multifunctional compound is preferred. Above all, oxycarboxylic acid such as malic acid and citric acid is preferably used, and malic acid is particularly preferably used. In the case of adding those trifunctional or more polyfunctional compounds, the amount added is preferably from 0.001 to 5 mol%, and more preferably from 0.05 to 0.5 mol%, to all dicarboxylic acid components. Where the amount exceeds the upper limit of the range, gel (unmolten material) is liable to be formed, and where the amount added is less than the lower limit, there is the tendency that effect of viscosity increase is difficult to obtain. As the aliphatic polyester component, materials produced from biomass resources may be used.

In the production method of the invention, a reaction catalyst can be added in esterification reaction and polycondensation reaction in order to accelerate the reaction. In the esterification reaction, sufficient reaction rate can be obtained in the absence of a catalyst. However, in the polycondensation reaction, reaction is difficult to proceed in the absence of a catalyst. Therefore, it is preferred to use a catalyst.

As esterification reaction catalyst, the same catalysts as polycondensation catalysts described hereinafter can be used. Above all, titanium compound, zirconium compound and germanium compound are preferred.

As the polycondensation reaction catalyst, compounds containing at least one kind of metal elements of groups 1 to 14 in the periodic table are generally used. The metal element specifically includes scandium, yttrium, samarium, titanium, zirconium, vanadium, chromium, molybdenum, tungsten, tin, antimony, cerium, germanium, zinc, cobalt, manganese, iron, aluminum, magnesium, calcium, strontium, sodium and potassium. Of those, scandium, yttrium, titanium, zirconium, vanadium, molybdenum, tungsten, zinc, iron and germanium are preferred, and titanium, zirconium, tungsten, iron and germanium are particularly preferred. Furthermore, to reduce terminal concentration giving influence to thermal stability and hydrolysis resistance of polyester, of the above metals, metal elements of groups 3 to 6 in the periodic table, that show Lewis acidity are preferred. Specifically, the metal elements are scandium, titanium, zirconium, vanadium, molybdenum and tungsten, and titanium and zirconium are particularly preferred from easy availability.

In the invention, compounds containing organic group such as carboxylic acid salt, alkoxy salt, organic sulfonic acid salt or β-diketonate salt, containing those metal elements, and furthermore, inorganic compounds such as oxides and halides of the above metals, and mixtures of those are preferably used as a catalyst.

When the conventional lamellar silicate described in, for example, Haruo Shiromizu, Clay Mineralogy (1995), Asakura Publishing Co., Ltd., is used alone or in combination with the above-described metal compound, as a catalyst, polycondensation rate may be increased. Therefore, such a catalyst system is preferably used.

The lamellar silicate specifically includes kaolin group such as dickite, nacrite, kaolinite, anorthite, metahalloysite and halloysite; serpentine group such as chrysotile, lizaldite and antigorite; smectite group such as montmorillonite, zauconite, beidelite, nontronite, saponite, hectorite and stevensite; vermiculite group such as vermiculite; mica group such as mica, illite, cericite and glauconite; and chlorite group such as attapulgite, sepiolite, palygorskite, bentonite, pyrophyllite and talc.

In the invention, the polymerization rate is increased when the catalyst is in a molten or dissolved state at the time of polycondensation. For this reason, compounds that are liquid at the time of polycondensation, or dissolve in an ester low polymer and polyester are preferred. It is preferred that polycondensation is conducted in the absence of a solvent. Apart from this, a small amount of a solvent may be used in order to dissolve a catalyst. The solvent for dissolving a catalyst includes alcohols such as methanol, ethanol, isopropanol and butanol; diols such as ethylene glycol, butanediol and pentanediol; ethers such as diethyl ether and tetrahydrofuran; nitriles such as acetonitrile; hydrocarbon compounds such as heptane and toluene; water; and their mixtures. The amount of the solvent used is such that catalyst concentration is generally 0.0001% by mass or more and 99% by mass or less.

As the titanium compound, tetraalkyl titanate and its hydrolysate are preferred, and examples of the titanium compound specifically include tetra-n-propyl titanate, tetraisopropyl titanate, tetra-n-butyl titanate, tetra-t-butyl titanate, tetraphenyl titanate, tetracyclohexyl titanate, tetrabenzyl titanate and mixed titanates of those, and hydrolysates of those. Furthermore, titanium(oxy)acetyl acetonate, titanium tetraacetyl acetonate, titanium (diisoproxide)acetyl acetonate, titanium bis(ammonium lactate)dihydroxide, titanium bis(ethylacetoacetate)diisopropoxide, titanium (triethanol-aminate)isopropoxide, polyhydroxytitanium stearate, titanium lactate, titanium triethanol aluminate, butyl titanate dimer and the like are preferably used. Furthermore, liquid products obtained by mixing alcohol, alkaline earth metal compound, phosphate ester compound and titanium compound are used. Of those, tetra-n-propyl titanate, tetraisopropyl titanate, tetra-n-butyl titanate, titanium (oxy)acetyl acetonate, titanium tetraacetyl acetonate, titanium bis(ammonium lactate)dihydroxide, polyhydroxytitanium stearate, titanium lactate, butyl titanate dimer, and liquid products obtained by mixing alcohol, alkaline earth metal compound, phosphate ester compound and titanium compound are preferred. Tetra-n-butyl titanate, titanium (oxy)acetyl acetonate, titanium tetraacetyl acetonate, polyhydroxytitanium stearate, titanium lactate, butyl titanate dimer, and liquid products obtained by mixing alcohol, alkaline earth metal compound, phosphate ester compound and titanium compound are more preferred. Tetra-n-butyl titanate, polyhydroxytitanium stearate, titanium (oxy)acetyl acetonate, titanium tetracetyl acetonate, and liquid products obtained by mixing alcohol, alkaline earth metal compound, phosphate ester compound and titanium compound are particularly preferred.

The zirconium compound specifically includes zirconium tetraacetate, zirconium acetate hydroxide, zirconium tris(butoxy)stearate, zirconium diacetate, zirconium oxalate, zirconyl oxalate, zirconium ammonium oxalate, zirconium potassium oxalate, polyhydroxyzirconium stearate, zirconium ethoxide, zirconium tetra-n-propoxide, zirconium tetraisopropoxide, zirconium tetra-n-butoxide, zirconium tetra-t-butoxide, zirconium tributoxyacetyl acetonate and mixtures of those. Of those, zirconyl diacetate, zirconium tris(butoxy)stearate, zirconium tetraacetate, zirconium acetate hydroxide, zirconium ammonium oxalate, zirconium potassium oxalate, polyhydroxyzirconium stearate, zirconium tetra-n-propoxide, zirconium tetraisoproxide, zirconium tetra-n-butoxide and zirconium tetra-t-butoxide are preferred. Zirconyl diacetate, zirconium tetraacetate, zirconium acetate hydroxide, zirconium tris(butoxy)stearate, zirconium ammonium oxalate, zirconium tetra-n-propoxide, and zirconium tetra-n-butoxide are more preferred, and zirconium tris(butoxy)stearate is particularly preferred for the reason that colorless polyester having high degree of polymerization is easily obtained.

The germanium compound specifically includes inorganic germanium compounds such as germanium oxide and germanium chloride; and organic germanium compounds such as tetraalkoxygermanium. From cost and easy availability, germanium oxide, tetraethoxygermanium and tetrabutoxy-germanium are preferred, and germanium oxide is particularly preferred.

The other metal-containing compounds include scandium compounds such as scandium carbonate, scandium acetate, scandium chloride and scandium acetylacetonate; yttrium compounds such as yttrium carbonate, yttrium chloride, yttrium acetate and yttrium acetylacetonate; vanadium compounds such as vanadium chloride, trichlorovanadium oxide, vanadium acetylacetonate and vanadium acetylacetonate oxide; molybdenum compounds such as molybdenum chloride and molybdenum acetate; tungsten compounds such as tungsten chloride, tungsten acetate and tungstic acid; and lanthanoid compounds such as cerium chloride, samarium chloride and ytterbium chloride.

At the time of polycondensation, phosphorus compound such as orthophosphoric acid, tris(triethylene glycol)-phosphate, ethyl diethyl phosphonoacetate, ethyl acid phosphate, triethylene glycol acid phosphate or phosphorus acid may be present as a stabilizer together with the polycondensation catalyst.

The amount of the catalyst added in the case of using a metal compound as the polycondensation catalyst is that the lower limit thereof is generally 0.1 ppm or more, preferably 0.5 ppm or more, and more preferably 1 ppm or more, and the upper limit thereof is generally 3,000 ppm or less, preferably 1,000 ppm or less, more preferably 250 ppm or less, and particularly preferably 130 ppm or less, in terms of a metal amount to polyester formed. Where the amount of the catalyst used is too large, this is economically disadvantageous. Additionally, although the reason is not yet clarified, the concentration of terminal carboxyl groups in polyester may be increased, and as a result, thermal stability and hydrolysis resistance of the polyester may be decreased due to increase in carboxyl group terminal amount and residual catalyst concentration. On the other hand, where the amount of the catalyst added is too small, polymerization activity is decreased, and due to this, thermal decomposition of polyester is induced during the production of polyester, and polyester showing practically useful properties is difficult to obtain.

The addition position of the catalyst to the reaction system is not particularly limited so long as the catalyst is added before melt polycondensation reaction process. The catalyst may be added at the time of charging raw materials. However, when the catalyst is present in the state that large amount of water is present or is generated, the catalyst deactivates, resulting in the cause of precipitation of foreign matters, and quality of a product may be impaired. Therefore, it is preferred that the catalyst is added after esterification reaction process.

In the production method of the invention, various additives may be used in a range that properties of the polyester obtained are not impaired. For example, nucleating agents for crystallization, such as talc, polyethylene, polypropylene, organic sulfonic acid salt and organic carboxylic acid salt may be added at the time of esterification reaction or at the time of polycondensation. Furthermore, thermal stabilizers, antioxidants, crystal nucleating agents, flame retardants, antistatic agents, release agents, ultraviolet absorbers and the like may be added at the time of esterification or polycondensation reaction.

Other than those various additives, reinforcing agents and volume extenders, such as glass fibers, carbon fibers, titanium whisker, mica, talc, $CaCO_3$, $TiO_2$ and silica, can be added at the time of forming aliphatic polyester. Furthermore, particularly unless properties of the resin of the invention are impaired, biodegradable polymers, thermoplastic resins and the like may be mixed with the resin of the invention to form a composition, and the composition may be molded. The conventional range can be applied to the mixing proportion of the above additives and resins.

(2) Production method of aliphatic polyester

The preferred embodiment of the production method of aliphatic polyester according to the invention using succinic acid as aliphatic dicarboxylic acid, 1,4-butanediol as aliphatic diol and malic acid as multifunctional compound is described below by referring to reference numerals and signs in the accompanying drawings. However, the invention is not limited to the embodiment shown in the drawings.

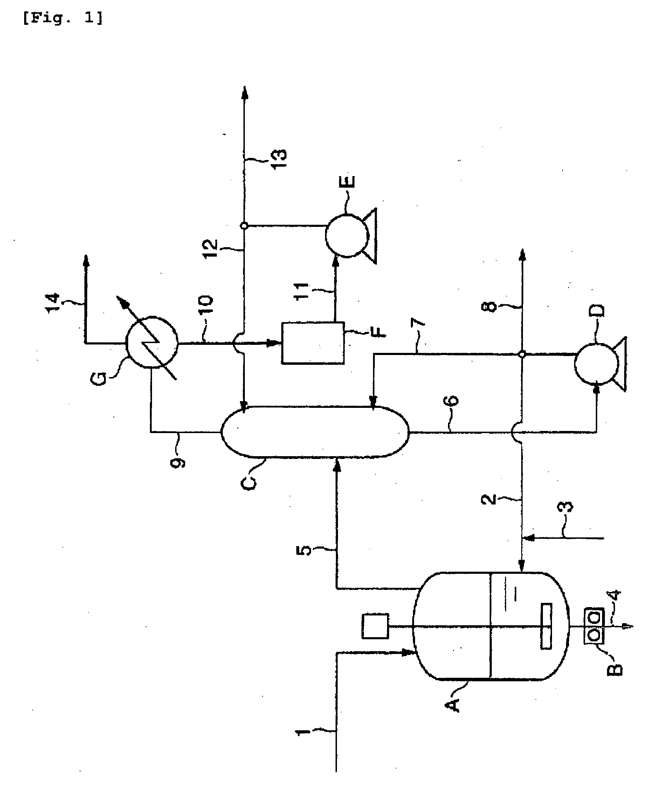

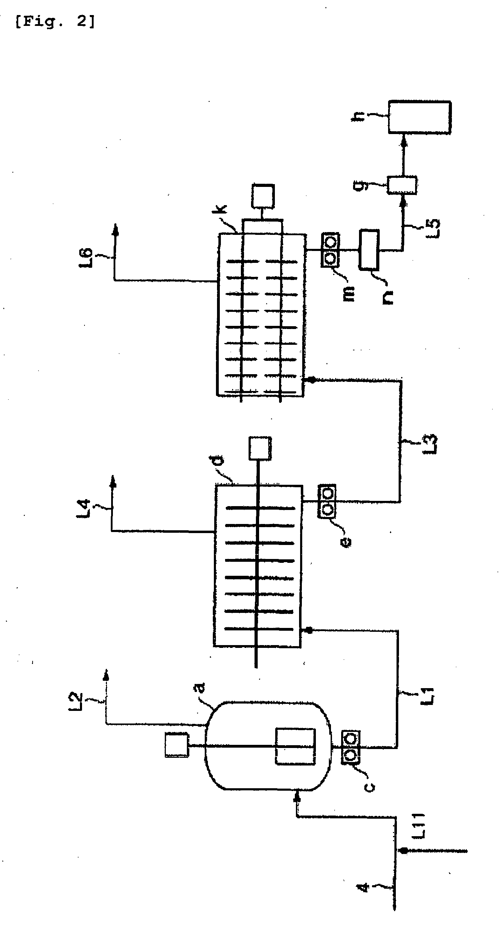

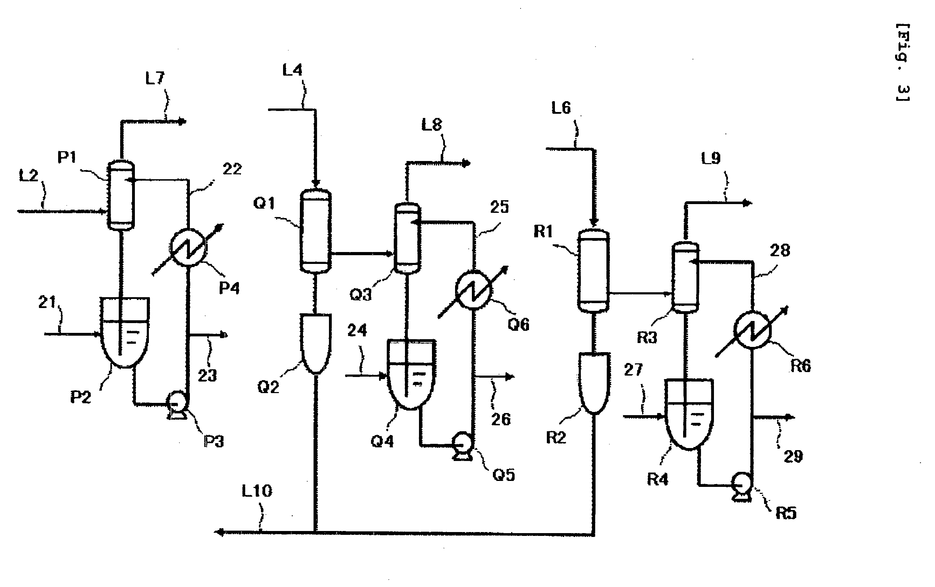

Fig. 1 is a schematic view showing one embodiment of esterification reaction process in the invention, Fig. 2 is a schematic view showing one embodiment of polycondensation process in the invention, and Fig. 3 is a schematic view showing one embodiment of polycondensation distillation process.

In Fig. 1, succinic acid and malic acid as raw materials are generally mixed with 1,4-butanediol in a raw material mixing tank (not shown), and the resulting mixture is supplied in a form of slurry or liquid to an esterification reaction tank A from a raw material supply line 1. In the case of adding a catalyst at the time of esterification reaction, the catalyst is formed as a solution of 1,4-butanediol in a catalyst preparation tank (not shown), and the solution is supplied from an esterification reaction tank catalyst supply line 3.

Charged molar ratio of 1,4-butanediol to succinic acid is generally from 0.95 to 2.0, preferably from 1.0 to 1.7, and more preferably 1.05 to 1.40. It is preferred that charged mol% of malic acid to succinic acid is from 0.05 to 0.50 mol%. In the embodiment shown in the drawings, the esterification reaction is conducted in one esterification reaction tank A, but can be conducted in continuous plural reaction tanks. As to esterification reaction temperature, the lower limit thereof is generally 150°C or higher, and preferably 180°C or higher, and the upper limit thereof is generally 260°C or lower, and preferably 250°C or lower. Reaction atmosphere is generally inert gas atmosphere such as nitrogen or argon. Reaction pressure is generally from 10 to 150 kPa, and the atmospheric pressure is preferred. Reaction time is generally 1 hour or more, and the upper limit thereof is generally 10 hours or less, and preferably 4 hours or less.

As the esterification reaction tank A used in the invention, the conventional reaction tank can be used. Any type of a vertical stirring complete mixing tank, a vertical thermal convection type mixing tank, a tower type continuous reaction tank and the like can be used. Furthermore, a single tank or plural tanks comprising the same kind or different kind of tanks connected in series may be used. Above all, a reaction tank having a stirring apparatus is preferred. As the stirring apparatus, for example, general types comprising a power part, a bearing, a shaft and a stirring blade, and high-speed rotating types such as a turbine stator type high-speed rotating stirring device, a disk mill type stirring device and a rotor mill type stirring device can be used.

Form of stirring is not limited. The ordinary stirring method of directly stirring a reaction liquid in a reaction tank from upper part, lower part, side part or the like of the reaction tank, a method of moving a part of a reaction liquid to the outside of the reaction tank by piping or the like, stirring the same with a line mixer or the like, and circulating the reaction liquid can be used. The kind of a stirring blade can be selected from the conventional blades, and specific examples thereof include a propeller blade, a screw blade, a turbine blade, a fan turbine blade, a disk turbine blade, a faudler blade, a FULLZONE blade and a MAXBLEND blade.

Gas distilled from the esterification reaction tank A is separated into a high boiling component and a low boiling component in a rectification column C through a distillation line 5. In general, the main component of the high boiling component is 1,4-butanediol, and the main components of the low boiling component are water and tetrahydrofuran.

The high boiling component separated in the rectification column C is extracted from an extraction line 6, a part thereof is circulated into the reaction tank A from a recirculation line 2 through a pump D, and a part thereof is returned to the rectification column C from a circulation line 7. Furthermore, the surplus is extracted outside from an extraction line 8. On the other hand, the low boiling component separated in the rectification column C is extracted from a gas extraction line 9, condensed in a condenser G, and temporarily stored in a tank F through a condensate line 10. A part of the low boiling component collected in the tank F is returned to the rectification column C through an extraction line 11, a pump E and a circulation line 12, and the remainder is extracted outside through an extraction line 13. The condenser G is connected to an exhaust apparatus (not shown) through a vent line 14. Esterification reaction product formed in the reaction tank A is supplied to a first polycondensation reaction tank a through an extraction pump B and an extraction line 4 of esterification reaction product.

The process shown in Fig. 1 shows the embodiment that the esterification tank catalyst supply line 3 is connected to the recirculation line 2 of circulation 1,4-butanediol to mix those, and the resulting mixture is supplied to a liquid phase part of the reaction tank A. However, those may be independent. Furthermore, the raw material supply line 1 may be connected to a liquid phase part of the reaction tank A. In the case of adding a catalyst to an esterification reaction product before polycondensation, the catalyst is prepared in a given concentration in a preparation tank (not shown), and then supplied to the extraction line 4 of an esterification reaction product through a catalyst supply line L11 in Fig. 2.

The esterification reaction product supplied to the first polycondensation reaction tank a shown in Fig. 2 from the extraction line 4 is polycondensed under reduced pressure to form a polyester low polymer, and the polyester low polymer is then supplied to a second polycondensation reaction tank d through an extraction gear pump c and an extraction line L1 as an outlet passage. In the second polycondensation reaction tank d, polycondensation reaction generally further proceeds under pressure lower than that in the first polycondensation reaction tank a. Polycondensate obtained is supplied to a third polycondensation reaction tank k through an extraction gear pump e and an extraction line L3 as an outlet passage, and polycondensation reaction further proceeds therein.

To conduct polycondensation reaction under reduced pressure, the polycondensation reaction tanks a, d and k are equipped with a pressure-reducing apparatus such as vacuum pump or ejector, for maintaining the inner pressure in reaction pressure of the atmospheric pressure or lower. Pressure-reducing extraction pipes connecting to the pressure-reducing apparatus are connected to distillation pipes L2, L4 and L6, and the inside of the reaction tanks a, d and k makes reduced pressure through those pipes. As to reaction pressure of the third polycondensation reaction tank k, the lower limit thereof is generally 0.01 kPa or more, and preferably 0.03 kPa or more, and the upper limit thereof is generally 1.4 kPa or less, and preferably 0.4 kPa or less. Where the pressure at the time of polycondensation reaction is too high, polycondensation time is long, and this induces decrease in molecular weight and coloration due to thermal decomposition of polyester, and there is the tendency that the production of polyester showing practically sufficient properties becomes difficult. On the other hand, a method for the production using ultrahigh vacuum polycondensation facilities is a preferred embodiment from the standpoint of improving polycondensation reaction rate. However, extremely expensive investment in facilities is required. Therefore, such a method is economically disadvantageous. Reaction temperature is within a range that the lower limit thereof is generally 150°C or higher, and preferably 180°C or higher, and the upper limit thereof is generally 270°C or lower, and preferably 260°C or lower. Where the temperature is too low, polycondensation reaction rate is slow, and long time is required for the production of polyester having high degree of polymerization. Additionally, high power stirring machine is required. Thus, too low temperature is economically disadvantageous. On the other hand, where the reaction temperature is too high, thermal decomposition of polyester is induced at the time of the production, and there is the tendency that the production of polyester having high degree of polymerization becomes difficult. As to reaction time, the lower limit thereof is generally 1 hour or more, and the upper limit thereof is generally 15 hours or less, preferably 8 hours or less, and more preferably 6 hours or less. Where the reaction time is too short, the reaction is insufficient, polyester having high degree of polymerization is difficult to obtain, and there is the tendency that mechanical properties of its molded article deteriorate. On the other hand, where the reaction time is too long, decrease in molecular weight due to thermal decomposition of polyester is remarkable, and there is the tendency that mechanical properties of its molded article deteriorate. Additionally, the amount of terminal carboxyl groups giving bad influence to durability of polyester resin is increased by thermal decomposition.

The type of the polycondensation reaction tank used in the invention is not particularly limited, and a vertical stirring polymerization tank, a horizontal stirring polymerization tank, a thin film evaporation type polymerization tank and the like can be used. The polycondensation reaction tank can be one tank, and can be the same kind or different kind of plural tanks arranged in series as shown in the drawing. Plural tanks are preferably used. It is preferred that at the latter stage of polycondensation at which viscosity of a reaction liquid is increased a horizontal stirring polymerization tank having thin film evaporation function excellent in interface renewal properties, plug flow properties and self-cleaning properties is selected. In the present embodiment, the first polycondensation reaction tank a is a vertical stirring polymerization tank, and the second polycondensation reaction tank d and the third polycondensation reaction tank k are a horizontal polycondensation tank constituted of plural stirring blade blocks and equipped with a self-cleaning type stirring blade.

The reaction product which has undergone polycondensation reaction in the third polycondensation reaction tank k is extracted in a form of a molten strand from a die head g through an extraction gear pump m and a filter n provided in an extraction line L5 as an outlet passage, cooled with water or the like, and then cut with a rotary cutter h to form pellets.

The filter n provided in the extraction line L5 in the embodiment shown in the drawing has a role of removing foreign matters in the reaction product, and it is preferred that the filter is provided to reduce foreign matters in polyester obtained. The place of the filter n provided is not limited to the position shown in the drawing, and is provided in at least one place of a reaction product passage of from the extraction line 4 to the die head g via the first polycondensation reaction tank a, the second polycondensation reaction tank d and the third polycondensation reaction tank k. As the filter n, the conventional filters can be used, and the filter is appropriately selected according to viscosity of a fluid passed. For example, in the case that the filter is provided at a place where a polymer of low viscosity is filtered, a filter that can filter a fluid having melt viscosity of from several ten to hundred poises may be used. In the case of providing in the vicinity of the die head g as shown in the drawing, a filter that can filter a fluid having melt viscosity of several thousands or more poises is required. Material of the filter includes a laminate metal mesh obtained by laminating a fine mesh determining filtration accuracy, a reinforcing mesh and a protective mesh, in plural meshes, respectively, and completely integration processing the same by sintering, and a metal non-woven fabric obtained by laminating felts of metal fibers made of stainless steel, and sintering the same.

The shape of the filter includes basket type, disc type, leaf disc type, tube type, flat cylinder type and pleat cylinder type. Those filters can be used by appropriately selected depending on conditions such as viscosity, pressure, temperature and the like of a fluid at the setting place. In the case of providing the filter at the place where a low polymer having low viscosity is filtered, tube type or flat cylinder type is preferred from the standpoints of cleaning properties and the like, and in the case of providing the filter at the place where polyester having high melt viscosity is filtered, leaf disc type or pleat cylinder type is preferred from the points of pressure resistance, treatment flow rate per unit area, and the like. The absolute filtration accuracy of those filters is preferably within a range that the lower limit thereof is generally 0.5 $\mu$m or more, and the upper limit thereof is generally 100 $\mu$m or less, and preferably 70 $\mu$m or less, from the points of filtration efficiency and the like. It is more preferred that the accuracy is within a range of from 0.5 to 30 $\mu$m in the case of filtration of a low polymer having low melt viscosity, and the accuracy is within a range of from 5 to 50 $\mu$m in the case of filtration of polyester having high melt viscosity.

On the other hand, by-products such as by-produced aliphatic diol, water, cyclic dimer and the like formed during polycondensation reaction are distilled outside each of the reaction tanks a, d and k through distillation pipes L2, L4 and L6. In this case, those by-products are distilled from each of the reaction tanks a, d and k such that the relationship among a boiling point t1 (°C) of by-produced aliphatic diol under the pressure in each of the reaction tanks a, d and k, a wall surface temperature T (°C) of the distillation pipes L2, L4 and L6 distilling by-produced aliphatic diol from each of the reaction tanks a, d and k, and inner temperature t2 (°C) in each of the reaction tanks a, d and k satisfies the following formula (1).

$$t1 < T < t2 \qquad\qquad (1)$$

Where T is t1 or lower, those by-products disturbing polycondensation reaction are difficult to be distilled, cyclic dimer and the like are deposited on walls of the distillation pipes L2, L4 and L6, and solidified, resulting in the cause of clogging, and this causes trouble in production. Thus, this is disadvantageous. On the other hand, where T is t2 or higher, reaction product and distillate deposited on distillation pipe walls in a form of droplets from the reaction tanks a, d and k are thermally decomposed to be liable to form foreign matters. The wall surface temperature T of the distillation pipe can be controlled by, for example, passing heat medium in the inside of a jacket provided outside the distillation pipe and controlling temperature of the heat medium. In this case, the temperature of the heat medium can be considered as the temperature T of the distillation pipe surface wall in the state that the heat medium is continuously passed. The inner temperature t2 of the reaction tanks a, d and k can be measured by a sheathed temperature detector inserted in liquid phase part of the reaction tanks a, d and k. From the point of distillation efficiency of the distillate, it is preferred that T is 150°C or higher, that is, T satisfies the following formula (2).

$$150\,(^{\circ}C) \leq T < t2 \qquad\qquad (2)$$

The lower limit of T is further preferably 170°C or higher, and most preferably 190°C or higher.

By-products distilled through the distillation pipes L2, L4 and L6 are recovered by a condenser for condensing by-produced cyclic dimer and a condenser for condensing by-produced aliphatic diol. Condensation of the by-produced cyclic dimer and condensation of the by-produced aliphatic diol may be conducted in separate condensers, and may be conducted in one condenser. In the present embodiment, as shown in Fig. 3, condensation of the by-produced cyclic dimer and condensation of the by-produced aliphatic diol are conducted in one wet condenser P1 at wake flow side of the distillation pipe L2 (pressure-reducing apparatus side), and condensation of by-products is conducted in two condensers Q1 and R1 for mainly condensing the by-produced cyclic dimer and two condensers Q3 and R3 for mainly condensing the by-produced aliphatic diol at wake flow side of the distillation pipes L4 and L6, respectively.

In Fig. 3, distillate distillated from the distillation pipe L2 is led to the wet condenser P1. In the wet condenser P1, liquid cooled in a heat exchanger P4 is supplied from a circulation line 22, and contacted with the distillate introduced from the distillation pipe L2, and as a result, by-produced aliphatic diol, water, cyclic dimer and the like are condensed in the liquid. The liquid is supplied to a liquid tank P2 from a liquid supply line 21, and supplied to a heat exchanger P4 through a pump P3. It is preferred that the liquid supplied from the liquid supply pipe 21 is 1,4-butanediol. Component condensed in the wet condenser P1 is collected in a liquid tank P2 together with a liquid circulated, and the surplus is extracted outside the system through the pump P3 and an extraction line 23. The remaining liquid is introduced into a heat exchanger P4, and again circulated to the wet condenser P1 through a circulation line 22. On the other hand, component not condensed is led into a pressure-reducing apparatus (not shown) through a vent line L7.

On the other hand, the distillates distilled from the distillation pipes L4 and L6 are once led to dry condensers Q1 and R1 Condensation of by-produced cyclic dimer is conducted in the dry condensers Q1 and R1. It is preferred that the cyclic dimer is condensed at a condensation temperature of from a melting point of the cyclic dimer to a boiling point thereof under reaction pressure, and extracted in a form of a liquid from the dry condensers Q1 and R1. The cyclic dimer condensed in the dry condensers Q1 and R1 is collected in liquid tanks Q2 and R2, and subjected to esterification reaction through a recycle line L10 into the esterification reaction tank A. The cyclic dimer is ring-opened under esterification reaction conditions to form a raw material of aliphatic polyester. Therefore, when the cyclic dimer extracted is subjected to esterification reaction as in the present embodiment, the by-produced cyclic dimer can effectively be utilized as a raw material, resulting in cost reduction of raw materials, which is preferred.

Components in the distillate, which were not condensed in the dry condensers Q1 and R1 are led into wet condensers Q3 and R3. In the wet condensers Q3 and R3, liquid cooled in heat exchangers Q6 and R6 is supplied from circulation lines 25 and 28, and contacted with the distillate, and as result, the by-produced aliphatic diol is mainly condensed in the liquid. The liquid is supplied to liquid tanks Q4 and R4 from liquid supply lines 24 and 27, and supplied to heat exchangers Q6 and R6 through pumps Q5 and R5. Components condensed in wet condensers Q3 and R3 are collected in liquid tanks Q4 and R4 together with a liquid circulated, and the surplus is extracted outside the system through pumps Q5 and R5 and extraction lines 26 and 29. The remaining liquid is introduced into heat exchangers Q6 and R6, and again circulated to the wet condensers Q3 and R3 through the circulation lines 25 and 28. On the other hand, component not condensed is led to a pressure-reducing apparatus (not shown) through vent lines L8 and L9.

The aliphatic polyester obtained by the production method of the invention has excellent transparency and color tone, has further excellent hydrolysis resistance and biodegradability, and can be produced inexpensively. Therefore, the aliphatic polyester is suitable for use in various films and use in injection molded articles. Specific applications include injection molded articles (for example, trays of fresh foods, containers of fast foods, and outdoor leisure products), extrusion molded articles (films, sheets and the like, for example, fish lines, fish nets, vegetation nets, and water-holding sheets), and hollow molded articles (bottles and the like). Additionally, the aliphatic polyester can be utilized in agricultural films, coating materials, fertilizer coating materials, laminate films, plates, stretched sheets, monofilaments, multifilaments, non-woven fabrics, flat yarns, staples, crimpled fibers, striped tapes, split yarns, composite fibers, blow bottles, foams, shopping bags, garbage bags, compost bags, cosmetic containers, detergent containers, bleach containers, ropes, bundle materials, operation yarns, hygienic cover stock materials, cool boxes, cushion material films, synthetic papers and the like.

EXAMPLES

The present invention is described in more detail by reference to the Examples, but the invention is not limited to the following Examples as far as it does not exceed the gist. Measurement methods of properties and evaluation items employed in the following examples are as follows.

<Analysis of metal element in catalyst>

0.1 g of a sample was wet decomposed in Kjeldahl flask with hydrogen peroxide in the presence of sulfuric acid, and a solution thereof of constant volume was prepared with distilled water. The solution was subjected to quantitative analyst using plasma emission spectrophotometer (ICP-AES ULtrace JY-138U, manufactured by JOBIN YVON). The amount was calculated in terms of metal content (% by mass) in catalyst.

<pH synthesis of catalyst solution>

pH electrode was dipped in a liquid catalyst, and pH was measured using an automatic titration apparatus (AUT-301) manufactured by DKK-TOA Corporation.

<Degree of esterification>

Degree of esterification was calculated from acid value and saponification value by the following calculation formula (3). The acid value was obtained by heating 0.3 g of a sample of esterification reaction product in 40 mL of benzyl alcohol at 180°C for 20 minutes, cooling the mixture for 10 minutes, and then titrating the same with $0.1 \text{ mol·L}^{-1}$ KOH/methanol solution. The saponification value was obtained by hydrolyzing an oligomer with 0.5N KOH/ethanol solution and titrating the same with 0.5N hydrochloric acid.

$$\text{Degree of esterification} = ((\text{Saponification value} - \text{acid value})/\text{saponification value}) \times 100 \qquad (3)$$

<Inherent viscosity (IV) dL/g>

Inherent viscosity was obtained using Ubbelohde viscometer in the following manner. That is, a mixed solvent of phenol/tetrachloroethane (mass ratio 1/1) was used, dropping time (second) of a polymer solution having a concentration of 0.5 g/dL and only the solvent at 30°C was measured, and viscosity was obtained by the following formula (4).

$$IV = ((1 + 4K_H \eta_{SP})^{0.5} - 1)/(2K_H C) \qquad (4)$$

(wherein $\eta_{SP} = \eta/\eta_{0} - 1$, $\eta$ is dropping time (second) of a sample solution, $\eta_0$ is dropping time (second) of a solvent, C is concentration (g/dL) of a sample solution, and $K_H$ is Huggins' constant. $K_H$ employed 0.33.)

<Terminal carboxyl group concentration (AV) of polyester, equivalent/ton>

Pellet-like polyester was ground, dried at 140°C for 15 minutes with a hot air drier, and cooled to room temperature in desiccator to obtain a sample. 0.1 g of the sample was precisely weighed and collected in a test tube. 3 mL of benzyl alcohol was added to the test tube, and the sample was dissolved at 195°C for 3 minutes while blowing dry nitrogen gas. 5 cm$^3$ of chloroform was gradually added, followed by cooling to room temperature. One or two droplets of phenol red indicator were added to the resulting solution, and the solution was titrated with a benzyl alcohol solution of $0.1 \text{ mol·L}^{-1}$ sodium hydroxide under stirring while blowing dry nitrogen gas. The titration was completed at the time that the color changed from yellow to red. As blank, the same operation was conducted without adding a polyester sample, and terminal carboxyl group amount (acid value) was calculated by the following formula (5).

$$\text{Terminal carboxyl group amount (equivalent/ton)} = (a - b) \times 0.1 \times f/w \qquad (5)$$

In the above formula, a is an amount ($\mu$L) of a benzyl alcohol solution of $0.1 \text{ mol·L}^{-1}$ sodium hydroxide required for titration, b is an amount ($\mu$L) of a benzyl alcohol solution of $0.1 \text{ mol·L}^{-1}$ sodium hydroxide required for titration in blank, w is an amount (g) of a polyester sample, and f is titer of a benzyl alcohol solution of $0.1 \text{ mol·L}^{-1}$ sodium hydroxide.

The titer (f) of a benzyl alcohol solution of 0.1 mol·L$^{-1}$ sodium hydroxide was obtained by the following method. 5 cm$^3$ of methanol was collected in a test tube, one or two droplets of ethanol solution of phenol red as an indicator were added, and the solution was titrated with 0.4 cm$^3$ of a benzyl alcohol solution of 0.1 mol·L$^{-1}$ sodium hydroxide up to the point of color change. 0.2 cm$^3$ of 0.1 mol·L$^{-1}$ hydrochloric acid aqueous solution having the known titer was collected as a standard liquid and added, and the solution was again titrated with a benzyl alcohol solution of 0.1 mol·L$^{-1}$ sodium hydroxide up to the point of color change (the above operations were conducted under blowing dry nitrogen gas). The titer (f) was calculated by the following formula (6).

Titer (f)=(Titer of 0.1 mol·L$^{-1}$ hydrochloric acid aqueous solution) $\times$ (Amount of 0.1N hydrochloric acid aqueous solution collected) ($\mu$L) / (Titration amount of benzyl alcohol solution of 0.1 mol·L$^{-1}$ sodium hydroxide) ($\mu$L) (6)

<Color b value>

Pellet-like polyester was filled in a cylindrical powder measurement cell having an inner diameter of 30 mm and a depth of 12 mm. Using a colorimeter, Color Meter Z300A (manufactured by Nippon Denshoku Industries Co., Ltd.), b value by Hunter's color-difference type chromatic coordinate in Lab display system described in Reference Example 1 of JIS Z8730 was obtained as a simple average value of measured at four positions by rotating measurement cell every 90° by reflection method.

<Amount of foreign matters>

Using 200 g of cylindrical pellets having a length of from 3 to 3.5 mm so as to be 25 mg of average pellet mass/number, black foreign matters of 0.1 mm or less on the pellet surface were measured with a foreign matter inspection apparatus (PGI-III, manufactured by Hu-Brain Co.).

(Example 1)

[Preparation of catalyst solution]

100 parts by mass of magnesium acetate tetrahydrate were placed in a glass-made eggplant-shaped flask equipped with a stirring apparatus, and 1,500 parts by mass of anhydrous methanol (purity: 99% by mass or more) was further added. 130.8 parts by mass of ethyl acid phosphate (mixing mass ratio of monoester form and diester form is 45:55) were further added, followed by stirring at 23°C. After confirming that magnesium acetate was completely dissolved in 15 minutes, 529.5 parts by mass of tetra-n-butyl titanate were added. Stirring is further continued for 10 minutes to obtain a uniform mixed solution. The mixed solution was transferred into a eggplant-shaped flask, and condensed under reduced pressure by an evaporator in an oil bath of 60°C. Most ethanol was distilled away in about 1 hour, and semi-transparent viscous liquid remained. The temperature of the oil bath was further elevated to 80°C, and condensation was further conducted under reduced pressure of 5 Torr to obtain a viscous liquid. The liquid catalyst was dissolved in 1,4-butanediol to adjust such that the content of titanium atom is 3.36% by mass. Storage stability of the catalyst solution in 1,4-butanediol was good, and the catalyst solution stored at 40°C under nitrogen atmosphere did not form precipitates in at least 40 days. pH of the catalyst solution was 6.3.

[Continuous polycondensation of aliphatic polyester]

Production of an aliphatic polyester resin was conducted in the following manners through the esterification process shown in Fig. 1 and the polycondensation processes shown in Fig. 2 and Fig. 3. Slurry at 60°C obtained by mixing 1.30 mol of 1,4-butanediol and 0.0033 mol of malic acid per 1.00 mol of succinic acid was continuously supplied in a rate of 42 kg/h to an esterification reaction tank (A) having a stirring machine, having an aliphatic polyester oligomer having the degree of esterification of 99% previously filled therein, and maintained at 230°C, through a raw material supply line (1) from a slurry preparation tank. At the same time, a bottom component (98% by mass or more is 1,4-butanediol) of a rectification column (C) at 100°C was supplied in a rate of 3.0 kg/h from a recirculation line (2).

Inner temperature of the reaction tank (A) was 230°C, and pressure was 101 kPa. Water formed, tetrahydrofuran and surplus 1,4-butanediol were distilled from a distillation line (5), and separated into a high boiling component and a low boiling component in the rectification column (C). 98% by mass or more of the high boiling component at the bottom of the column after stabilization of the system was 1,4-butanediol, and a part thereof was extracted outside through an extraction line (8) such that the liquid level in the rectification column (C) is constant. On the other hand, the low boiling component mainly comprising water and THF was extracted in a form of a gas from the top of the column, condensed in a condenser (G), and extracted outside from an extraction line (13) such that the liquid level of a tank (F) is constant.

Constant amount of an oligomer formed in the reaction tank (A) was extracted from an oligomer extraction line (4) using a pump (B), and the liquid level was controlled such that the residence time in terms of succinic acid unit in the liquid in the reaction tank (A) is 3 hours. The oligomer extracted from the extraction line (4) was continuously supplied to a first polycondensation reaction tank (a). After stabilization of the system, the degree of esterification of a reaction product collected at an outlet of the esterification reaction tank (A) was 90.6%.

The catalyst solution previously prepared by the above-described method was further diluted with 1,4-butanediol, so that the concentration as titanium atom was 0.17% by mass. This liquid was supplied in a rate of 1.0 kg/h to the extraction line (4) of esterification reaction product through a catalyst supply line (L11) shown in Fig. 2.

Inner temperature of the first polycondensation reaction tank (a) was 240°C, pressure was 2.67 kg, the liquid level was controlled such that residence time is 2 hours, and initial polycondensation reaction was conducted. A reaction liquid extracted was continuously supplied to a second polycondensation reaction tank (d).

By-produced water, tetrahydrofuran, 1,4-butanediol and cyclic dimer were condensed in a wet condenser (P1) using 1,4-butanediol through a double-pipe distillation pipe (L2) heat-insulated with a heat medium jacket, and condensate was recovered from an extraction line (23). A vent line (L7) is connected to a pressure-reducing apparatus (not shown). Wall surface temperature of a distillation pipe (L2) was controlled by setting heat medium temperature to 200°C. Inner temperature of the wet condenser (P1) was controlled by setting outlet liquid temperature of a heat exchanger (P4) to 50°C. The wall surface temperature was substantially equal to the heat medium temperature.

Inner temperature of the second polycondensation reaction tank (d) was 240°C, pressure was 0.67 kPa, the liquid level was controlled such that residence time is 1.5 hours, and polycondensation reaction was made to further proceed. Polyester obtained was continuously supplied to a third polycondensation reaction tank (k) through an extraction line (L3) from an extraction gear pump (e).

By-produced water, tetrahydrofuran, 1,4-butanediol and cyclic dimer were passed through a double-pipe distillation pile (L4) heat-insulated with a heat medium jacket, a part of by-products was condensed in a dry condenser (Q1), and condensate was recovered in a tank (Q2). The remaining by-products were led to a wet condenser (Q3) using 1,4-butanediol and condensed therein, and the condensate was recovered from an extraction line (26). A vent line (L8) is connected to a pressure-reducing apparatus (not shown). Wall surface temperature of the distillation pipe (L4) was controlled by setting heat medium temperature to 200°C. Inner temperature of the dry condenser (Q1) was controlled by setting medium temperature to 130°C, and inner temperature of the wet condenser (Q3) was controlled by setting outlet liquid temperature of a heat exchanger (Q6) to 50°C.

Inner temperature of the third polycondensation reaction tank (k) was 240°C, pressure was 0.13 kPa, the liquid level was controlled such that residence time is 1 hour, and polycondensation reaction was made to further proceed. Polyester obtained was passed through a leaf disc type filter (n) having absolute filtration accuracy of 40 $\mu$m, comprising a laminate metal non-woven fabric as a filter medium through an extraction line (L5) by an extraction gear pump (m), extracted in a strand shape from a die head (g), and cut with a pelletizer (h) to produce aliphatic polyester pellets.

By-produced water, tetrahydrofuran, 1,4-butanediol and cyclic dimer were passed through a double-pipe distillation pipe (L6) heat-insulated with a heat medium jacket, a part of by-products was condensed in a dry condenser (R1), and condensate was recovered in a tank (R2). The remaining by-products were led to a wet condenser (R3) using 1,4-butanediol and condensed therein, and the condensate was recovered from an extraction line (29). A vent line (L9) is connected to a pressure-reducing apparatus (not shown). Wall surface temperature of the distillation pipe (L6) was controlled by setting heat medium temperature to 200°C. Inner temperature of the dry condenser (R1) was controlled by setting medium temperature to 130°C, and inner temperature of the wet condenser (R3) was controlled by setting outlet liquid temperature of a heat exchanger (R6) to 50°C.

By-products (99% by mass is cyclic dimer, and 1% by mass is 1,4-butanediol) recovered in condensate tanks (Q2 and R2) of dry condensers were supplied in a rate of 0.11 kg/h to an esterification reaction tank (A) through a double-pipe distillation pipe (L10) heat-insulated with a heat medium jacket (130°C).

Operation was continued for one week under the above conditions. Operation conditions and results of quality evaluation of pellets collected after one week operation are shown in Table 1.

(Example 2)

Aliphatic polyester pellets were produced in the same manner as in Example 1, except that:

(I) Water, tetrahydrofuran, 1,4-butanediol and cyclic dimer, by-produced in the second polycondensation reaction tank (d) were led to the wet condenser (Q3) using 1,4-butanediol directly without through the dry condenser (Q1) ; and
(II) Water, tetrahydrofuran, 1,4-butanediol and cyclic dimer, by-produced in the third polycondensation reaction tank (k) were led to the wet condenser (R3) using 1,4-butanediol directly without through the dry condenser (R1).

Heat exchangers (Q6 and R6) of the wet condensers clogged. Therefore, the heat exchanger was switched to a standby machine (not shown) at a frequency of one time/day, and cleaning was repeated. Operation conditions and results of quality evaluation of pellets collected after one week operation are shown in Table 1.

(Example 3)

Aliphatic polyester pellets were produced in the same manner as in Example 2, except that the filter (n) was not provided in the reaction product extraction line of the third polycondensation reaction tank (k). Similar to Example 2, heat exchangers (Q6 and R6) of the wet condensers clogged. Therefore, the heat exchanger was switched to a standby machine (not shown) at a frequency of one time/day, and cleaning was repeated. Operation conditions and results of quality evaluation of pellets collected after one week operation are shown in Table 1.

(Example 4)

Aliphatic polyester pellets were produced in the same manner as in Example 2, except that the heat medium temperature was controlled to 150°C in order to change the wall surface temperature of each of distillation pipes (L2, L4 and L6) of the first polycondensation reaction tank (a), the second polycondensation reaction tank (d) and the third polycondensation reaction tank (k). Similar to Example 2, heat exchangers (Q6 and R6) of the wet condensers clogged. Therefore, the heat exchanger was switched to a standby machine (not shown) at a frequency of one time/day, and cleaning was repeated. Operation conditions and results of quality evaluation of pellets collected after one week operation are shown in Table 1.

(Comparative Example 1)

Aliphatic polyester pellets were produced in the same manner as in Example 3, except that the heat medium temperature was controlled to 240°C in order to change the wall surface temperature of each of distillation pipes (L2, L4 and L6) of the first polycondensation reaction tank (a), the second polycondensation reaction tank (d) and the third polycondensation reaction tank (k). Similar to Example 3, heat exchangers (Q6 and R6) of the wet condensers clogged. Therefore, the heat exchanger was switched to a standby machine (not shown) at a frequency of one time/day, and cleaning was repeated. Operation conditions and results of quality evaluation of pellets collected after one week operation are shown in Table 1.

(Comparative Example 2)

Aliphatic polyester pellets were produced in the same manner as in Example 3, except that the heat medium temperature was controlled to 260°C in order to change the wall surface temperature of each of distillation pipes (L2, L4 and L6) of the first polycondensation reaction tank (a), the second polycondensation reaction tank (d) and the third polycondensation reaction tank (k). Similar to Example 3, heat exchangers (Q6 and R6) of the wet condensers clogged. Therefore, the heat exchanger was switched to a standby machine (not shown) at a frequency of one time/day, and cleaning was repeated. Operation conditions and results of quality evaluation of pellets collected after one week operation are shown in Table 1.

[Table 1]

(TABLE 1)

| | | | Example 1 | Example 2 | Example 3 | Example 4 | Comparative Example 1 | Comparative Example 2 |
|---|---|---|---|---|---|---|---|---|
| First polycondensation tank (Vertical reaction tank) | Reaction tank inner temperature (t2) | °C | 240 | 240 | 240 | 240 | 240 | 240 |
| | Reaction tank inner pressure | kPa | 2.67 | 2.67 | 2.67 | 2.67 | 2.67 | 2.67 |
| | 1,4-Butanediol boiling point (t1) | °C | 135 | 135 | 135 | 135 | 135 | 135 |
| | Distillation pipe wall surface temperature (T) | °C | 200 | 200 | 200 | 150 | 240 | 260 |
| | Condenser (P1) temperature | °C | 50 | 50 | 50 | 50 | 50 | 50 |
| Second polymerization tank (Horizontal reaction tank) | Reaction tank inner temperature (t2) | °C | 240 | 240 | 240 | 240 | 240 | 240 |
| | Reaction tank inner pressure | kPa | 0.67 | 0.67 | 0.67 | 0.67 | 0.67 | 0.67 |
| | 1,4-Butanediol boiling point (t1) | °C | 110 | 110 | 110 | 110 | 110 | 110 |
| | Distillation pipe wall surface temperature (T) | °C | 200 | 200 | 200 | 150 | 240 | 260 |
| | Condenser (Q1) temperature | °C | 130 | Not provided | Not provided | Not provided | Not provided | Not provided |
| | Condenser (Q3) temperature | °C | 50 | 50 | 50 | 50 | 50 | 50 |
| | Heat exchanger (Q6) switching frequency | | No switching | One time/day | One time/day | One time/day | One time/day | One time/day |

EP 2 228 399 B1

(continued)

| | | | Example 1 | Example 2 | Example 3 | Example 4 | Comparative Example 1 | Comparative Example 2 |
|---|---|---|---|---|---|---|---|---|
| Third polycondensation tank (Horizontal reaction tank) | Reaction tank inner temperature (t2) | °C | 240 | 240 | 240 | 240 | 240 | 240 |
| | Reaction tank inner pressure | kPa | 0.13 | 0.13 | 0.13 | 0.13 | 0.13 | 0.13 |
| | 1,4-Butanediol boiling point (t1) | °C | 85 | 85 | 85 | 85 | 85 | 85 |
| | Distillation pipe wall surface temperature (T) | °C | 200 | 200 | 200 | 150 | 240 | 260 |
| | Condenser (R1) temperature | °C | 130 | Not provided | Not provided | Not provided | Not provided | Not provided |
| | Condenser (R3) temperature | °C | 50 | 50 | 50 | 50 | 50 | 50 |
| | Heat exchanger (R6) switching frequency | | No switching | One time/day | One time/day | One time/day | One time/day | One time/day |
| Whether or not filter is present (between third polycondensation tank and extraction die) | | | Presence | Presence | Absence | Absence | Absence | Absence |
| Whether or not condensates of condensers (Q3, R3) are recycled to esterification reaction tank | | | Recycled | None | None | None | None | None |
| Pellet quality (After one week operation) | IV | dl/g | 1.86 | 1.86 | 1.85 | 1.83 | 1.88 | 1.90 |
| | AV | Equivalent/ton | 19 | 20 | 19 | 18 | 22 | 22 |
| | Color b value | - | 1.9 | 1.8 | 1.9 | 1.7 | 2.3 | 2.5 |
| | Foreign matter (≦0.1 mm) | 1200 g pellets | 1 | 1 | 5 | 4 | 10 | 15 |

From Table 1, the polyester produced by the production method of Example 1 was that the amount of foreign matters is very small, and quality of pellets is good. Furthermore, clogging of heat exchanger of a wet condenser caused in other all Examples and Comparative Examples was not observed. In Example 2 in which condensation of by-produced cyclic dimer and condensation of by-produced aliphatic diol were conducted with one wet condenser without using a dry condenser, polyester having the same quality as that produced in Example 1 was obtained, but clogging of heat exchanger of the wet condenser was generated. Furthermore, the polyester obtained in Example 3 and Example 4, in which a filter was not provided, does not have practical problem, but increase in the amount of foreign matters was observed as compared with Examples 1 and 2.

On the other hand, in Comparative Example 1 and Comparative Example 2, in which by-products were distilled at a temperature higher than the temperature defined in the invention, great decrease was appeared in the quality of pellets. In particular, increase in the amount of foreign matters was remarkable as compared with Examples 1 to 4.

The present invention is described above regarding the embodiment that is considered to be most practical and preferred at present. However, the invention is not limited to the embodiment disclosed in the present description, and it should be understood that changes can appropriately be made in the scope that will not violate the gist or the thought of the invention readable from the scope of claims and the entire description, and the production methods involving such changes are also included in the technical scope of the invention.

While the invention has been described in detail and with reference to specific embodiments thereof, it will be apparent to one skilled in the art that various changes and modifications can be made therein without departing from the spirit and scope thereof.

This application is based on Japanese Patent Application (Patent Application No. 2007-337887) filed December 27, 2007, the entire contents thereof being hereby incorporated by reference.

INDUSTRIAL APPLICABILITY

According to the present invention, foreign matters in an aliphatic polyester resin can be reduced. As a result, clogging is difficult to be generated in the production process, and an aliphatic polyester resin can be produced stably and efficiently. Due to this, an aliphatic polyester molded article having good quality can be obtained. Therefore, the industrial value of the present invention is remarkable.

**Claims**

1. A method for producing aliphatic polyester comprising aliphatic dicarboxylic acid and aliphatic diol as the main components, which uses continuous plural reaction tanks and obtains polyester through esterification reaction and melt polycondensation reaction, **characterized in that**
the melt polycondensation reaction is conducted while distilling by-produced aliphatic diol generated by reaction such that the relationship among a boiling point t1 (°C) of by-produced aliphatic diol under the pressure in a polycondensation reaction tank for conducting melt polycondensation reaction, a wall surface temperature T (°C) of a distillation pipe which distills by-produced aliphatic diol from the polycondensation reaction tank, and an inner temperature t2 (°C) of the polycondensation reaction tank satisfies the following formula (1):

$$t1 < T < t2 \tag{1}$$

2. The production method of aliphatic polyester as claimed in claim 1, **characterized in that** the relationship between T (°C) and t2 (°C) further satisfies the following formula (2):

$$150\,(°C) \leq T < t2 \tag{2}$$

3. The production method of aliphatic polyester as claimed in claim 1 or 2, **characterized in that** 50 mol% or more of the aliphatic dicarboxylic acid is succinic acid, and the aliphatic diol is 1,4-butanediol.

4. The production method of aliphatic polyester as claimed in any one of claims 1 to 3, **characterized in that** trifunctional or more multifunctional compound is contained as a copolymer component in the aliphatic polyester.

5. The production method of aliphatic polyester as claimed in any one of claims 1 to 4, **characterized in that** the polycondensation reaction tank is a horizontal polycondensation reaction tank equipped with a pressure-reducing apparatus for maintaining the pressure in the polycondensation reaction tank in a reaction pressure of the atmospheric pressure or lower, and a condenser for condensing by-produced aliphatic diol which is distilled outside the polycondensation reaction tank from the distillation pipe.

6. The production method of aliphatic polyester as claimed in claim 5, **characterized in that** the horizontal polycondensation tank is further equipped with a condenser for condensing by-produced cyclic dimer which is distilled outside the polycondensation reaction tank from the distillation pipe.

7. The production method of aliphatic polyester as claimed in claim 6, **characterized in that** the by-produced cyclic dimer is extracted from the condenser for condensing the by-produced cyclic dimer, and the extracted cyclic dimer is subjected to the esterification reaction.

8. The production method of aliphatic polyester as claimed in any one of claims 1 to 7, **characterized in that** a filter is provided on at least one place of flow passage of a reactant in the melt polycondensation reaction.

**Patentansprüche**

1. Ein Verfahren zur Herstellung eines aliphatischen Polyesters, umfassend aliphatische Dicarbonsäure und aliphatisches Diol als die Hauptkomponenten, bei dem mehrere kontinuierliche Reaktionsbehälter verwendet werden und Polyester durch Veresterungsreaktion und Schmelzpolykondensationsreaktion erhalten wird, **dadurch gekennzeichnet, dass**
die Schmelzpolykondensationsreaktion durchgeführt wird, während als Nebenprodukt hergestelltes aliphatisches Diol, das durch die Reaktion erzeugt wird, destilliert wird, derart dass die Beziehung zwischen einem Siedepunkt t1 (°C) von als Nebenprodukt hergestelltem aliphatischem Diol unter dem Druck in einem Polykondensationsreaktionsbehälter zur Durchführung von Schmelzpolykondensationsreaktion, einer Wandoberflächentemperatur T (°C) eines Destillationsrohrs, welches als Nebenprodukt hergestelltes aliphatisches Diol aus dem Polykondensationsreaktionsbehälter destilliert und einer inneren Temperatur t2 (°C) des Polykondensationsreaktionsbehälters die folgende Formel (1) erfüllt:

$$t1 < T < t2 \qquad\qquad (1)$$

2. Das Herstellungsverfahren von aliphatischem Polyester wie in Anspruch 1 beansprucht, **dadurch gekennzeichnet, dass** die Beziehung zwischen T (°C) und t2 (°C) ferner die folgende Formel (2) erfüllt:

$$150\ (°C) \leqq T < t2 \qquad\qquad (2)$$

3. Das Herstellungsverfahren von aliphatischem Polyester wie in Anspruch 1 oder 2 beansprucht, **dadurch gekennzeichnet, dass** 50 Mol% oder mehr der aliphatischen Dicarbonsäure Bernsteinsäure sind und das aliphatische Diol 1,4-Butandiol ist.

4. Das Herstellungsverfahren von aliphatischem Polyester wie in einem der Ansprüche 1 bis 3 beansprucht, **dadurch gekennzeichnet, dass** eine trifunktionelle oder mehr multifunktionelle Verbindung als eine Copolymerkomponente in dem aliphatischen Polyester enthalten ist.

5. Das Herstellungsverfahren von aliphatischem Polyester wie in einem der Ansprüche 1 bis 4 beansprucht, **dadurch gekennzeichnet, dass** der Polykondensationsreaktionsbehälter ein horizontaler Polykondensationsreaktionsbehälter ist, der mit einer Druckreduzierungsvorrichtung zur Erhaltung des Drucks im Polykondensationsreaktionsbehälter bei einem Reaktionsdruck von atmosphärischem Druck oder niedriger und einem Kondensator zum Kondensieren von als Nebenprodukt hergestelltem aliphatischen Diol, das außerhalb des Polykondensationsreaktionsbehälters im Destillierrohr destilliert wird, ausgestattet ist.

6. Das Herstellungsverfahren von aliphatischem Polyester wie in Anspruch 5 beansprucht, **dadurch gekennzeichnet,**

**dass** der horizontale Polykondensationsbehälter ferner mit einem Kondensator zum Kondensieren von als Nebenprodukt hergestelltem cyclischen Dimer, das außerhalb des Polykondensationsreaktionsbehälters im Destillierrohr destilliert wird, ausgestattet ist.

**7.** Das Herstellungsverfahren von aliphatischem Polyester wie in Anspruch 6 beansprucht, **dadurch gekennzeichnet, dass** das als Nebenprodukt hergestellte cyclische Dimer aus dem Kondensator zum Kondensieren des als Nebenprodukt hergestellten cyclischen Dimers abgeführt wird und das abgeführte cyclische Dimer der Veresterungsreaktion unterworfen wird.

**8.** Das Herstellungsverfahren von aliphatischem Polyester wie in einem der Ansprüche 1 bis 7 beansprucht, **dadurch gekennzeichnet, dass** ein Filter an mindestens einer Stelle eines Fließwegs eines Reaktanten in der Schmelzpolykondensationsreaktion bereitgestellt wird.

**Revendications**

**1.** Procédé de production de polyester aliphatique comprenant un acide dicarboxylique aliphatique et un diol aliphatique comme les constituants principaux, lequel utilise plusieurs récipients de réaction continus et obtient du polyester par une réaction d'estérification et une réaction de polycondensation à l'état de fusion, **caractérisé en ce que** la réaction de polycondensation à l'état de fusion est réalisée tout en distillant un diol aliphatique produit de manière secondaire généré par réaction de sorte que la relation d'un point d'ébullition t1(°C) de diol aliphatique produit de manière secondaire sous la pression dans un récipient de réaction de polycondensation pour réaliser une réaction de polycondensation à l'état de fusion, une température de surface de paroi T(°C) d'un tuyau de distillation qui distille du diol aliphatique produit de manière secondaire à partir du récipient de réaction de polycondensation, et une température interne t2(°C) du récipient de réaction de polycondensation satisfait la formule (1) suivante :

$$t1 < T < t2 \qquad\qquad (1)$$

**2.** Procédé de production de polyester aliphatique selon la revendication 1, **caractérisé en ce que** la relation entre T(°C) et t2(°C) satisfait en autre la formule (2) suivante :

$$150(°C) \leqq T < t2 \qquad\qquad (2)$$

**3.** Procédé de production de polyester aliphatique selon la revendication 1 ou 2, **caractérisé en ce que** 50 % en mol ou plus de l'acide dicarboxylique aliphatique sont l'acide succinique, et le diol aliphatique est le 1,4-butanediol.

**4.** Procédé de production de polyester aliphatique selon l'une quelconque des revendications 1 à 3, **caractérisé en ce qu'**un composé trifonctionnel ou de fonctionnalité supérieure est contenu comme un constituant copolymère dans le polyester aliphatique.

**5.** Procédé de production de polyester aliphatique selon l'une quelconque des revendications 1 à 4, **caractérisé en ce que** le récipient de réaction de polycondensation est un récipient de réaction de polycondensation horizontal équipé d'un appareil de réduction de pression pour maintenir la pression dans le récipient de réaction de polycondensation dans une pression de réaction de la pression atmosphérique ou inférieure, et d'un condenseur pour condenser du diol aliphatique produit de manière secondaire qui est distillé à l'extérieur du récipient de réaction de polycondensation à partir du tuyau de distillation.

**6.** Procédé de production de polyester aliphatique selon la revendication 5, **caractérisé en ce que** le récipient de polycondensation horizontal est de plus équipé d'un condenseur pour condenser un dimère cyclique produit de manière secondaire qui est distillé à l'extérieur du récipient de réaction de polycondensation à partir du tuyau de distillation.

**7.** Procédé de production de polyester aliphatique selon la revendication 6, **caractérisé en ce que** le dimère cyclique produit de manière secondaire est extrait du condenseur pour condenser le dimère cyclique produit de manière secondaire, et le dimère cyclique extrait est soumis à la réaction d'estérification.

8. Procédé de production de polyester aliphatique selon l'une quelconque des revendications 1 à 7, **caractérisé en ce qu'**un filtre est fourni sur au moins un endroit du passage d'écoulement d'un corps réagissant dans la réaction de polycondensation à l'état de fusion.

[Fig. 1]

[Fig. 2]

[Fig. 3]

**REFERENCES CITED IN THE DESCRIPTION**

**Patent documents cited in the description**

- EP 1153954 A1
- JP 2005248174 A
- JP 2002194072 A
- JP 2007337887 A

**Non-patent literature cited in the description**

- Saturated Polyester Resin Handbooks. Nikkan Ko-gyo Shimbun, Ltd, 575